(19) Europäisches Patentamt
European Patent Office
Office européen des brevets

(11) EP 0 537 361 B1

## (12) EUROPEAN PATENT SPECIFICATION

(45) Date of publication and mention
of the grant of the patent:
**14.05.1997 Bulletin 1997/20**

(21) Application number: **92907630.5**

(22) Date of filing: **27.03.1992**

(51) Int Cl.$^6$: **G11B 20/10**, H04B 1/66

(86) International application number:
**PCT/JP92/00387**

(87) International publication number:
**WO 92/17884 (15.10.1992 Gazette 1992/26)**

(54) **HIGH EFFICIENCY DIGITAL DATA ENCODING AND DECODING APPARATUS**

Digitales Datenkodierungs-und Dekodierungsgerät mit hoher Wirksamkeit

APPAREIL DE CODAGE ET DE DECODAGE DE DONNEES NUMERIQUES A HAUT NIVEAU D'EFFICACITE

(84) Designated Contracting States:
**AT BE CH DE DK FR GB IT LI LU NL SE**

(30) Priority: **29.03.1991 JP 91183/91**
**29.03.1991 JP 91185/91**

(43) Date of publication of application:
**21.04.1993 Bulletin 1993/16**

(73) Proprietor: **SONY CORPORATION
Tokyo 141 (JP)**

(72) Inventors:
• **TSUTSUI, Kyoya
Shinagawa-ku Tokyo 141 (JP)**
• **SHIMOYOSHI, Osamu
Shinagawa-ku Tokyo 141 (JP)**

(74) Representative: **Harris, Ian Richard et al
c/o D. Young & Co.,
21 New Fetter Lane
London EC4A 1DA (GB)**

(56) References cited:
EP-A- 0 206 352    EP-A- 0 370 277
EP-A- 0 379 613    EP-A- 0 446 031
EP-A- 0 458 645    WO-A-90/09064

• PROC. IEEE CONF. ON CIRCUITS AND COMPUTERS (ICCC82) 28 November 1982, NEW-YORK, US pages 474 - 477; BRANDENBURG ET AL: 'A DIGITAL SIGNAL PROCESSOR FOR REAL TIME ADAPTIVE TRANSFORM CODING OF AUDIO SIGNALS UP TO 20 KHZ BANDWIDTH'
• Frequenz, vol.43, no. 9, Sept. 1989, pages 252-256,"Coding of Audio Signals with overlapping Block Transform and Adaptive Window Functions"

## Description

This invention relates to a high efficiency digital data encoding and decoding apparatus by encoding input digital data by so-called high efficiency encoding.

Frequenz, vol 43, no. 9, Sept 1989 pages 252-256 B. Edler, "Coding of Audio Signals with Overlapping Block Transform and Adaptive Window Functions" discloses a bit-reduction method for audio signals based on overlapping transforms with time-domain aliasing cancellation whose window functions and transform lengths are adapted to the input signal. Adaptive windowing improves the performance of transform coding with overlapping blocks, which is distinguished by a high coding gain, in the presence of impulses and instantaneous amplitude increases in the input signal.

EP-A-0 370 277 discloses a sub-band transmission system in which the frequency band of a digital audio signal is split into a plurality of sub-bands using Quadrature Mirror Filters. The signal in the highest frequency sub-band is filtered and its data rate is reduced in a rate converter. The signals in all the frequency bands are processed by data reduction encoders for transmission.

EP-A-0 446 031 was published on 11 September 1991, after the priority date of the present invention and thus is part of the state of the art for AT, DE, FR, GB and NL in accordance with Articles 54(3) and (4) of the European patents Convention. EP-A-0 446 031 discloses apparatus for efficiently encoding a digital signal which includes an arrangement for dividing the signal into a number of frequency band signals. The frequency band signals are segmented into blocks and the blocks are orthogonally transformed to form coefficient data. The coefficient data is then quantized. A circuit detects whether the lowest frequency one of the frequency band signals contains a transient. If so, a control circuit controls processing of the lowest frequency band signal so as to reduce the perceptibility of noise in the processed signal. The control circuit may be operative, in the event of detection of a transient, to increase the number of bits used for quantizing the lowest frequency band signal, to reduce the block size of the lowest frequency band signal, and/or to reduce the level of the lowest frequency band signal.

There are a variety of high efficiency encoding of audio or voice signals, such as, for example, sub-band coding (SBC) of dividing audio signals etc. on time axis into a plurality of frequency bands for encoding, transform coding (ATC) of converting signals on the time axis into signals on the frequency axis by orthogonal transform for division into a plurality of frequency bands for encoding for each band, and an adaptive bit allocation (APC-AB) of combining SBC with adaptive predictive coding (APC) for dividing signals on the time axis into a plurality of bands, converting the band signals into base band signals and effecting a plurality of orders of linear predictive analyses for predictive coding.

In the sub-band coding, for example, after the signals are divided into a plurality of bands, the signals are each band are converted into signals on the frequency axis by orthogonal transform, after which the encoding is carried out for each band. In effecting the orthogonal transform, the input audio signals may be grouped into blocks at an interval of a predetermined unit time (frame) and discrete cosine transform is effected for each block for converting the signals on the time axis into those on the frequency axis. In effecting the division into plural bands, certain characteristics of the human auditory sense may be taken into account. Thus the audio signals may be divided into a plurality of, for example, 25, bands, so that the bandwidth will become broader towards higher bands known as critical bands. In sub-band coding, the number of bits accorded to each band is dynamically or adaptively changed, for raising the compression efficiency, while maintaining the number of bits per unit time block constant.

For example, when encoding the DCT coefficient data from the DCT processing operation by bit allocation, the DCT coefficient data for each band resulting from the DCT processing operation for each block are encoded with a dynamically allocated number of bits.

In the high efficiency encoding, a technique of high efficiency encoding is briskly employed, which makes use of the so-called masking effect taking account of certain characteristics of the human auditory sense. The masking effect means a phenomenon in which certain signals are masked by other signals and become inaudible. Thus the noise below the masking level is tolerable. The masking effect may be taken into account so that the number of allocated bits is reduced for signal components below the tolerable noise level for reducing the bit rate.

If, with the above encoding, the input audio signals are divided into a plurality of bands, and orthogonal transform, such as DCT, is to be effected for each band, that is if frequency analyses are performed for each band, the signals of each band are divided into blocks at an interval of predetermined time units, that is, on the frame-by-frame basis, and orthogonal transform is effected for each block for each band.

On the other hand, the coefficient data (DCT coefficient data) produced by orthogonal transform are encoded and the number of bits allocated at the time of encoding is allocated for each block on the frame-by-frame basis.

Meanwhile, the input audio signals are not necessarily stationary signals substantially free from fluctuations in level such that the signal level is changed variegatedly. For example, the signals may be transiently changed signals, such as signals the peak level of which is changed significantly within a frame. For example, if the signals are audio signals of percussion sounds from a percussion instrument, the signals of the percussion sound become the transiently changed signals.

If the audio signals changed in properties from stationary to transient or vice versa are unanimously processed by orthogonal transform for each block on the frame-by-frame basis, and the transformed data are encoded, the encoding may not be said to be suited to the signal properties, so that the sound quality after decoding is not said to be optimum to the auditory sense.

When encoding is to be performed using the allowable noise level, the number of bits allocated for encoding is determined based on the ratio (or difference) of the energy in the block and the tolerable noise level conforming to the amount of masking as found from the energy in the block.

However, there are signals bearing the character of a tone (signals having high tonality) among audio signals. If the signals have high tonality, bit allocation based on the block-by-block energy can not be calculated accurately. That is, the energy within a given block may be the same when the data in each block are of high tonality as when otherwise. In such case, it is not desirable to make calculations for bit allocation based on the same energy despite the fact that characteristics of the data are different from block to block. Above all, accurate bit allocation can not be made for the high tonality signals thus resulting in deterioration of the sound quality. That is, despite the fact that a large number of bits are required for high tonality signals, the required number of bits can not be allocated to these signals if the number of bits is calculated based on the above energy, thus again resulting in deterioration in the signal quality.

In view of the above depicted status of the art, it is an object of the present invention to provide a high efficiency digital data encoding apparatus in which high efficiency compression encoding more adaptive to the properties or characteristics of the input audio signals may be achieved and in which the decoded signals more amenable to the human auditory sense may be produced.

It is another object of the present invention to provide a high efficiency digital data encoding and decoding apparatus in which satisfactory bit allocation may be achieved even with high tonality signals to improve the sound quality.

In accordance with the present invention there is provided a high efficiency digital data encoding apparatus in which said input digital data are divided into plural bands, blocks each composed of plural samples are formed in each band, orthogonal transform is effected in each block of the band to produce coefficient data which coefficient data are encoded, comprising a block length decision circuit for determining the block length for orthogonal transform of each band based on characteristics of block data prior to orthogonal transform of each band, and said orthogonal transform of each band is effected with the block length determined by said block length decision circuit.

In an embodiment of the invention, the input digital data supplied to each of the orthogonal transform means may be data for each critical band. The orthogonal transform may for example be discrete cosine transform (DCT) or fast Fourier transform (FFT), to produce the coefficient data that are encoded.

In the embodiment, in setting the block length, processing is so made that only the output of the orthogonal transform means is selected which will minimize the number of bit allocation required for encoding the outputs from the orthogonal transform means (i.e. the number of bits required for realization of a predetermined sound quality). The frame-by-frame number of bits outputted from the orthogonal transform means after the data from orthogonal transform have been encoded is a predetermined number. However, since adaptive bit allocation is achieved during encoding, the number of bits required for encoding may be different from the predetermined frame-by-frame number of bits.

Therefore, if the number of bits required for encoding is less than the predetermined number of bits, the remaining redundant bits may be used to effect more satisfactory encoding, so that, by selecting the output of the orthogonal transform means which will give the least number of bits, an optimum encoding output may be produced. Besides, even if the number of bits required for encoding becomes larger than the predetermined frame-by-frame number of bits, an encoded output with least deterioration due to encoding may be achieved by selecting the output of the orthogonal transform means which will give the least number of bits.

Reference will now be made, by way of example, to the accompanying drawings, in which:

Fig. 1 is a block circuit diagram showing a schematic construction of the high efficiency digital data encoding apparatus.

Fig. 2 is a block diagram showing the schematic construction of an illustrative encoder.

Fig. 3 is a diagrammatic view showing a DCT processing block in case the block length is the same for each band.

Fig.4 is a diagrammatic view showing a DCT processing block in case the block length for the high frequency range is one-half the frame length.

Fig.5 is a diagrammatic view showing a DCT processing block in case the block length for the high frequency range is one-fourth the frame length and that for the mid frequency range is one-half the frame length.

Fig.6 is a diagrammatic view showing a DCT processing block in case the block length for the high frequency range is one-fourth the frame length and that for the mid frequency range is one-fourth the frame length.

Fig.7 is a flow chart for illustrating the decision of the number of first-order bit allocation and correction of the number of bits.

Fig.8 is a block circuit diagram for illustrating a schematic construction of a high efficiency digital data encoding according to an embodiment of the present invention.

Fig.9A is a graph showing typical transient signals.

Fig.9B is a graph showing typical stationary signals,

Fig. 10 is diagrammatic view showing a typical block in DCT processing.

Fig. 11 is a block diagram showing a schematic construction of a decoding apparatus as a counterpart of the high efficiency encoding apparatus.

Fig. 12 is a block circuit diagram showing a high efficiency digital data encoding apparatus.

Fig. 13 is a diagrammatic view for explanation of a block floating coefficient and an allowable noise level per data.

Fig. 14 is a block circuit diagram showing a detailed construction for setting a tolerable noise level.

Fig. 15 is a graph showing a Burke spectrum.

Fig. 16 is a graph showing a masking spectrum.

Fig. 17 is a graph showing a synthesis of the minimum audibility curve and a masking spectrum.

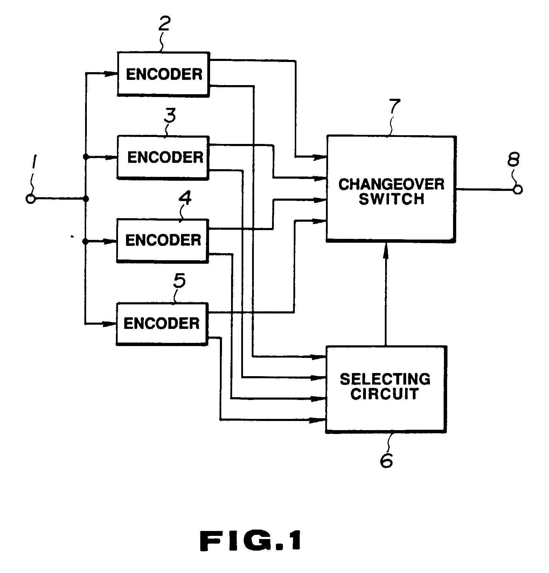

Fig. 1 shows a high efficiency digital data encoding apparatus for dividing input digital data, such as audio data, into a plurality of bands so that the bandwidth will be broader in the direction of increasing frequencies, forming blocks each consisting of a plurality of samples, for each of the bands, effecting orthogonal transform by e.g. discrete cosine transform for each block of each band to produce coefficient data (DCT coefficient data) and encoding the coefficient data with an adaptively allocated number of bits. With the present high efficiency encoding apparatus, a plurality of encoders, such as four encoders 2 to 5, each being provided with orthogonal transform means for effecting orthogonal transform of the input digital data for each band with block lengths which are different from one band to another, and only one of the outputs from the encoders 2 to 5, that is, one of the outputs from the orthogonal transform means, is selected based on the outputs from the orthogonal transform means of the encoders 2 to 5. In other words, the block lengths of the DCT processed blocks for each band differ from one encoder to another and only one of the outputs of the encoders 2 to 5 is selected by a selecting circuit 6 based on the outputs from the encoders 2 to 5. That is, the state of the changeover switch 7 is changed over based on the selecting signal from the selecting circuit 6 for selecting only one of the outputs of the encoders 2 to 5.

It is noted that the selecting operation by the selecting circuit 6 is so made that only the output of the encoder having the least number of bits required by the encoders performing the encoding operations is selected. That is, although the number of bits for each frame outputted from the encoders 2 to 5 is a certain predetermined number, the number of bits actually required in encoding a given frame is determined by an adaptive bit allocation taking into account the masking effect as later described. The above mentioned selection is so made that only the output of the encoder with the least number of bits actually required in the encoding operation is selected.

Thus, if the number of bits required for encoding is less than the number of bits which is predetermined on the frame-by-frame basis, redundant bits may be used for effecting more satisfactory encoding. On the other hand, by selecting the encoder output with the least number of bits, the most satisfactory encoded output may be produced. If the number of bits necessitated by the encoders 2 to 5 exceeds the number of bits which is predetermined on the frame-by-frame basis, an encoding output with the least deterioration due to encoding may be produced by selecting the output of the encoders 2 to 5 having the least number of bits required for encoding.

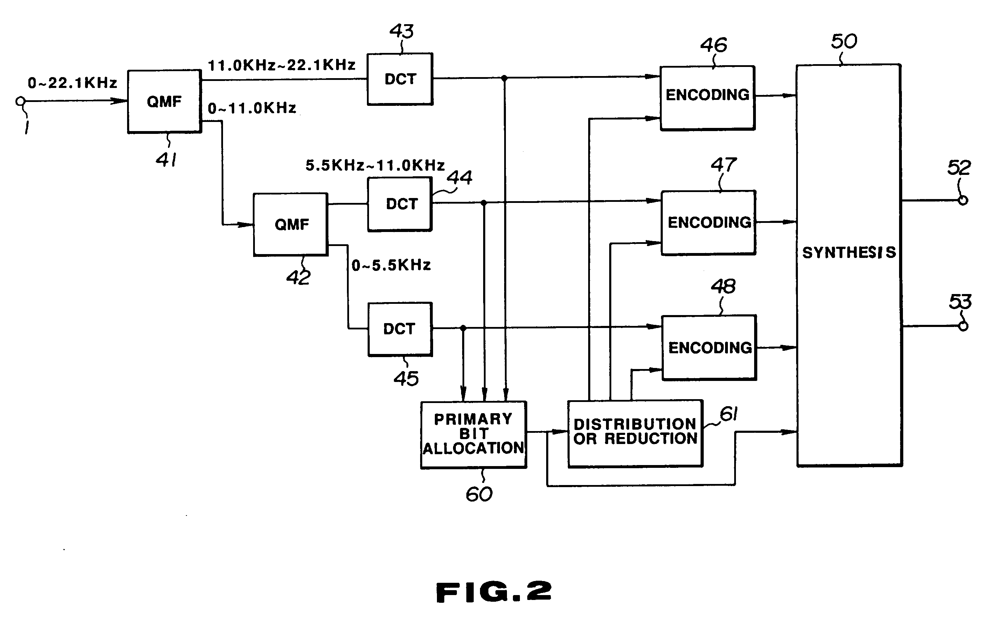

That is, in each of the encoders 2 to 5 of the present high efficiency digital data encoding apparatus, as shown in Fig. 2, input digital data, such as audio or voice data, supplied via an input terminal 1, are divided in frequency into roughly three frequency bands, by quadrature mirror filters 41 and 42, so that the bandwidth will become broader in the direction of the increasing frequencies in accordance with the frequency band division according to the so-called critical bands. In DCT circuits 43, 44 and 45, blocks each consisting of plural samples are formed for each band, produced upon division, and orthogonal transform (transform from time axis into frequency axis) is performed for each block for producing coefficient data (DCT coefficient data). Meanwhile, the outputs of the DCT circuits 43, 44 and 45 correspond to e.g. two high frequency bands, three mid frequency bands and to e.g. 20 low frequency bands according to the critical frequency band, respectively. The DCT coefficient data of the respective bands from the DCT circuits 43 to 45 are encoded with an adaptive number of bit allocation by encoding circuits 46, 47 and 48. That is, encoding of the DCT coefficient data of the three bands in the encoding circuits 46, 47 and 48 of the present embodiment is effected with the adaptive number of bit allocation based on certain characteristics of the human auditory sense.

For effecting the above mentioned band division, digital data (0 ··· 22.1 kHz) obtained upon sampling analog audio signals etc. into e.g. 1024 samples are supplied to an input terminal 1 of each of the encoders 2 to 5. These digital data are divided by the QMFs 41 and 42 into roughly three bands (0 ··· 5.5 kHz, 5.5 kHz to 11.0 kHz and 11.0 to 22.1 kHz), so that the bandwidth will be broader towards the higher frequencies. In QMF 41, the digital data of 0 to 22.1 kHz are divided into two to produce an output of 11.0 kHz to 22.1 kHz and an output of 0 to 11.0 kHz which are supplied to DCT circuit 43 and to QMF 42, respectively. The 0 to 11.0 kHz output supplied to QMF 42 is further divided into two by QMF 42 to produce a 5.5 kHz to 11.0 kHz output and a 0 to 5.5 kHz output which are supplied to DCT circuits 44 and 45, respectively.

In each of the DCT circuits 43, 44 and 45, a plurality of, e.g. 1024 samples, of the supplied band data constitute a frame B, and Fourier transform is effected for each block formed by the frame B to produce DCT coefficient data. It is noted that the DCT processing block length in each of the DCT circuits 43, 44 and 45 has a different value for each of the encoders 2 to 5.

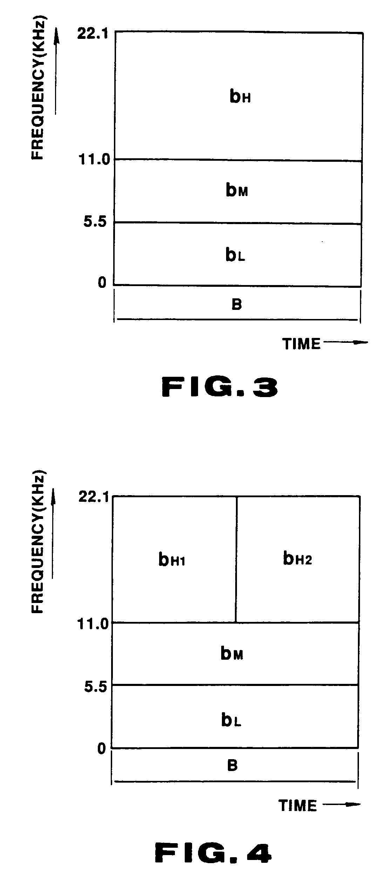

For example, with encoder 2, the DCT processing block length is the same length, as shown in Fig.3. That is, with encoder 2, the DCT processing block length $b_H$ in the DCT circuit 43 associated with the higher range of 11.0 kHz to 22.1 kHz, the DCT processing block length $b_M$ in the DCT circuit 44 associated with the mid range of 5.5 kHz to 11.0 kHz and the DCT processing block length $b_L$ in the DCT circuit 45 associated with the lower range of 0 to 5.5 kHz, are selected to be equal to the frame B having the above mentioned predetermined unit time duration.

With encoder 3, the DCT processing block length is selected to be shorter in the high frequency range, as shown in Fig.4. That is, with encoder 3, the block length in the high range DCT circuit 43 is one-half the block length $b_L$ in the low range DCT circuit 45 and the block length $b_M$ in the mid range DCT circuit 44. In the present example, the high frequency block is divided into blocks $b_{H1}$, $b_{H2}$.

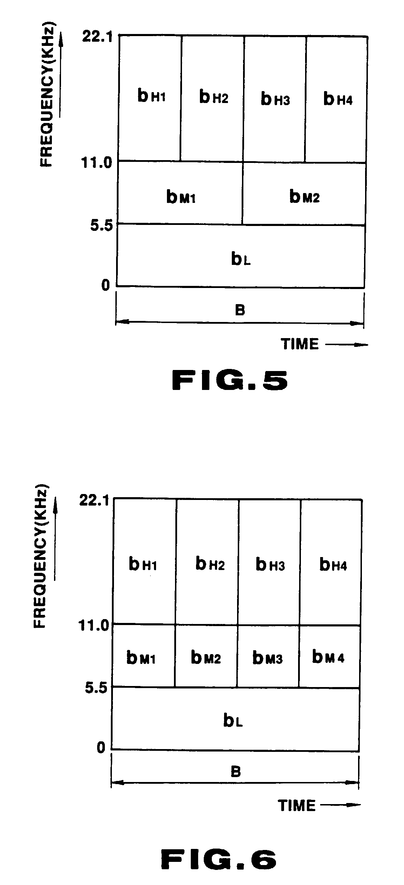

In encoder 4, the DCT processing block length is selected to be shorter in the mid and high frequency ranges, as shown in Fig.5. That is, with the block length $b_L$ of the low range, the mid range has block lengths $b_{M1}$, $b_{M2}$ equal to e.g one-half the low range block length and the high range has block lengths $b_{H1}$, $b_{H2}$, $b_{H3}$ and $b_{H4}$, equal to one-fourth the low range block length or one-half the mid range block length.

In encoder 5, the DCT processing block length is selected to be shorter in the high and mid frequency ranges and longer in the low frequency ranges, as shown in Fig.6. That is, with the block length $b_L$ of the low range, the high range has block lengths $b_{H1}$, $b_{H2}$, $b_{H3}$ and $b_{H4}$, equal to one-fourth the low range block length, while the mid range has the block length $b_{M1}$, $b_{M2}$. $b_{M3}$, $b_{M4}$ equal to e.g. one-fourth the low range block length.

The block lengths of the high and mid ranges are selected to be shorter than the block length of the low range, as discussed above in connection with Figs.4 to 6, by the following reason. That is, the frequency resolution in the human auditory sense is not so high in the high range, while being high in the low range, so that it is necessary to maintain frequency resolution in the low range and hence the block length for DCT processing can not be diminished excessively in the low range. For this reason, the block length is selected to be longer in the low range. On the other hand, since the stationary period is longer with the low range signals than with the high range signals, it is effective to shorten the block length in the high and mid ranges (i.e. to raise the temporal resolution). In this consideration, the block length of the high and low ranges is selected to be shorter and that of the low range is selected to be longer in the present embodiment.

Thus, in the present embodiment, for simultaneously satisfying the requirements for resolution on the frequency axis in view of the human auditory sense and those for resolution on the time axis, the number of samples is increased for the low range (0 to 5.5 kHz) for raising the frequency resolution, while temporal resolution is raised for the high range (11.0 to 22.1 kHz) and occasionally for the mid range (5.5 to 11.0 kHz).

In view also of the characteristics of input audio signals, it is effective to shorten the DCT processing block lengths for the high and mid ranges.

That is, the DCT processing block lengths may be effectively changed depending on whether the input audio signals are transient signals or stationary signals. In the case of the stationary signals, it is effective to set the block lengths of the respective bands so as to be of equal length, as shown in Fig.3, whereas, in the case of the transient signals, it is effective to set the block lengths of the high and mid range bands so as to be of shorter lengths, as shown in Fig.6. By reducing the DCT processing block length for transient signals in this manner, more bits can be allocated to blocks in frame B having a high peak level (transient signal part) during encoding, while the number of bits can be diminished for other blocks. In this manner, bits can be allocated to blocks truly in need of the bits in each band of frame B to follow up with temporal changes of the spectrum. On the other hand, redundant encoding of signals of similar spectra in each block of the frame B may be avoided in the case of stationary signals.

Meanwhile, the DCT processing block lengths for the respective bands are not limited to the examples shown in Figs.3 to 6. Thus a variety of block length patterns may be envisaged, such as reducing the block length further in the high range or simultaneously reducing the block length for the low range.

In each of the encoders 2 to 5, DCT processing is effected in each of the DCT circuits 43 to 45 in Fig.2 to provide different block lengths for each band to produce DCT coefficient data which are transmitted to encoding circuits 46 to 48.

Meanwhile, each of the encoders 2 to 5 effects coding by adaptive bit allocation by the encoding circuits 46 to 48 having the following arrangement.

That is, each of the encoders 2 to 5 is provided with a primary bit allocation number decision circuit 60 for determining the number of bits actually required for encoding DCT coefficient data in the frame B from the DCT circuits 43, 44 and 45, that is, the number of bits required for realizing a predetermined sound quality, and a bit number correction circuit 61 for effecting bit distribution or bit reduction for adjusting the primary number of bits determined by the circuit 60 to the preset ultimate bit number in the frame B. Thus the encoding of the DCT coefficient data in each of the encoding circuits 46 to 48 is effected by the number of bits obtained by correcting the primary number of bits by the bit number correcting circuit 61, that is, the above mentioned ultimate number of bits.

Meanwhile, the primary number of bits is determined in the primary bit allocation number decision circuit 60 in consideration of the so-called masking effect, which will now be explained.

Masking is related with certain characteristics of the human auditory sense. That is, among the characteristics of the human auditory sense with respect to sounds, there is what is termed the masking effect, which is divided into a temporal masking effect and a concurrent masking effect. The concurrent masking effect means such an effect in which a small sound or noise is masked by a larger sound produced concurrently and thereby becomes inaudible. The temporal masking effect is such an effect in which a small sound or noise is masked by a larger sound produced temporally before the small noise (forward masking) or by a larger sound temporally after the small sound (backward masking) and thereby becomes inaudible. By reason of characteristics of the human auditory sense, the effect of the forward masking lasts long, for example, for about 100 msec, whereas that of backward masking lasts for a shorter time of the order of 5 msec. The level of the masking effect (masking quantity) is of the order of 20 dB and 30 dB for forward masking and backward masking, respectively.

Therefore, if the masking effect is taken into consideration at the time of bit allocation in the frame B, optimum bit allocation may be achieved. That is, since the number of bits may be reduced for the masked signal portion without any adverse effects on the auditory sense, the number of bits may be reduced for the masked signal portion for realizing effective encoding with a smaller number of bits. The masking level or masking quantity may be found on the basis of the sum of energies for the respective critical bands. For finding the masking quantity, the masking quantity of masking of signals of a given critical band by other critical bands may also be found. The tolerable noise level for each band is determined based on the masking quantity and the number of bit allocation for encoding may be found based on the tolerable noise level for each band.

The primary number of bits, thus determined by the primary bit allocation number decision circuit 60, is transmitted to the bit number correction circuit 61, which circuit 61 carries out bit distribution or bit reduction for matching the primary number of bits determined by the circuit 60 to the above mentioned ultimate number of bits preset in the frame B.

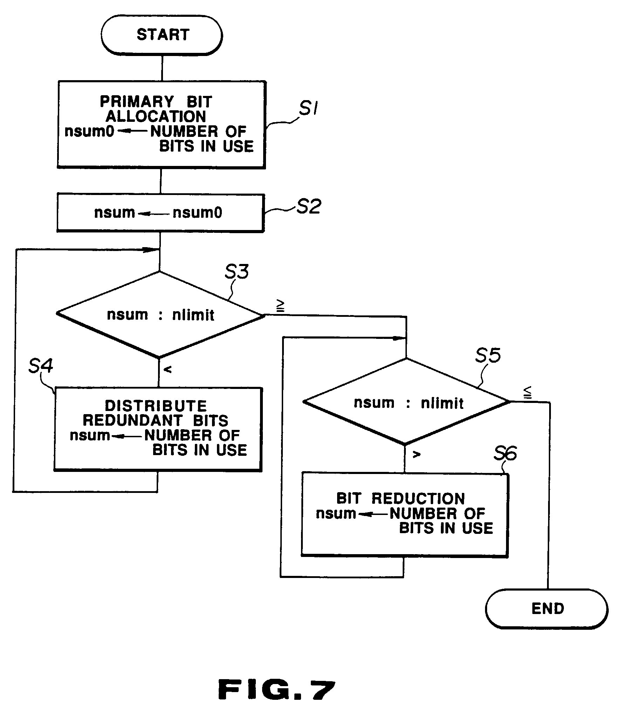

The sequence of operations for determining the primary bit number by the circuits 60 and 61 and for bit distribution or reduction is shown in a flow chart of Fig.7.

Referring to this flow chart, and at step S1, the number of primary bit allocation determined by the primary bit allocation number decision circuit 60, that is the primary number of bits actually required in encoding in the encoding circuits 46, 47 and 48, as found on the basis of the calculation of the masking quantity, is substituted into a variable nsum0. At step S2, this variable nsum0 is sent to the bit number correction circuit 61, which circuit 61 then substitutes the variable nsum0 into a variable nsum.

At step S3, it is checked if the variable nsum is less than or not less than a number nlimit indicating the ultimate number of bits preset in the frame B. If the variable nsum is less than the value nlimit, program proceeds to step S4 and, if the variable nsum is not less than the value nlimit, program proceeds to step S5.

If the variable nsum is less than the value nlimit indicating the ultimate number of bits, the number of bits is in excess. Thus, at step S4, the redundant number of bits (the number of bits corresponding to the difference between the variable nsum and the value nlimit) is further distributed in the frame B. The redundant bits are distributed into the bands or blocks for further improving the sound quality. The number of bits after the bit distribution is returned to step S3.

At step S5, it is checked if the variable nsum is larger than or not larger than the value nlimit indicating the ultimate number of bits. If the variable nsum is not larger than the value nlimit, the variable nsum becomes equal to the value nlimit in view of step S3 to terminate the processing. If the variable nsum is larger than the value nlimit, program proceeds to step S6.

If the variable nsum is larger than the value nlimit, the number of bits is in excess. Thus, at step S6, the number of bits in excess is subtracted from the number of bits corresponding to the variable nsum. The bit reduction is made from the range or block which does not affect the sound quality. The number of bits after bit reduction is returned to step S5.

By the sequence of operations shown in the flow chart of Fig.7, the number of bits is corrected, and encoding in the encoding circuits 46 to 48 is effected on the basis of the thus corrected number of bits.

Encoded data from the encoding circuits 46 to 48 are transmitted to a synthesis circuit 50. The information concerning the primary number of bit is determined by the primary bit allocation number decision circuit 60 (information indicating the number of bits necessary for realization of a predetermined sound quality) is also transmitted to the synthesis circuit 50. Data of the respective bands are combined in the synthesis circuit 50 and, among the thus combined data, the encoded data are outputted at an output terminal 52, while the information concerning the primary bit number is outputted at an output terminal 53.

The outputs from output terminals 52 and 53 in Fig. 2 are outputted from the encoders 2 to 5 shown in Fig. 1. The encoded data from the encoders 2 to 5 are sent to the changeover switch 7, while the information concerning the primary bit number is sent to the selecting circuit 6.

In the selecting circuit 6, only the output of that one of the encoders 2 to 5 in which the number of the bits necessary for encoding , that is the number of bits necessary for realization of the predetermined sound quality, is minimized, is selected, based on the information concerning the respective primary bit numbers sent from the encoders 2 to 5, as mentioned previously, and the thus selected signals are transmitted to the changeover switch 7. Thus the changeover switch 7 effects a changeover operation of outputting only one of encoded outputs supplied thereto from the encoders 2 to 5, based on the above mentioned selection signal. In this manner, only the thus selected encoded output is outputted from the output terminal 8.

By decoding the encoded output by a decoder, not shown, based on the above mentioned information concerning the primary bit allocation, the produced sound is of an optimum sound quality.

As described above, with the high efficiency digital data encoding apparatus, only the output of the optimally encoder output is selected from the outputs of the encoders 2 to 5 to produce encoded data, the encoded data may be encoded and converted into sound for producing the optimum sound quality. Also, since the actually encoded output is selected, the block selected for DCT processing is of an optimum block length, while the selection of the block length is also facilitated. The apparatus of the present embodiment may be adapted to an encoding apparatus for data recorded in a package medium, such as a compact disc (CD). Since only a decoder (player) needs to be owned by the user in this case, the encoding apparatus may be of any desired size.

In the above described embodiment, the DCT circuits 43 to 45 with different processing blocks are arranged in each of the encoders 2 to 5. Alternatively, only one encoder may be provided and a DCT circuit for effecting DCT processing having the function of performing DCT processing operations with different DCT processing block lengths may be provided for each band. In this case, only the output of the DCT circuit is selected from plural DCT circuits associated with respective bands having the minimum number of bits necessary for encoding.

In such high efficiency encoding apparatus, only one encoder is provided, in place of plural encoders, as in the case of Fig.1. Comparing the construction of the encoder to the construction shown in Fig.2, the DCT circuits 43 to 45 (DCT circuits) are not associated in a one-to-one relation as in Fig.2, but a plurality of DCT circuits corresponding to the number of block lengths in the respective bands in Figs.3 to 6 are provided. For example, three DCT circuits having different block lengths are provided for the high range, while three DCT circuits having three different block lengths are provided for the mid range and a sole DCT circuit is provided for the low range. In other words, three DCT circuits are provided for the high range for DCT processing high range data with three kinds of block lengths corresponding to the block length $b_H$ of Fig.3, the block lengths $b_{H1}$ and $b_{H2}$ of Fig.4 and the block lengths $b_{H1}$, $b_{H2}$, $b_{H3}$, $b_{H4}$ of Figs.5 and 6. In similar manner, three DCT circuits are provided for the mid range for DCT processing mid range data with three kinds of block lengths corresponding to the block length $b_M$ of Figs.3 and 4, the block lengths $b_{M1}$ and $b_{M2}$ of Fig.5 and the block lengths $b_{M1}$, $b_{M2}$, $b_{M3}$ and $b_{M4}$ of Fig.6, while a DCT circuit is provided for the low range for DCT processing the low range data with a sole block length corresponding to the block length $b_L$ shown in Figs.3 to 6. By transmitting the outputs of the DCT circuits to the selecting circuit 6, and by selecting only one of the DCT circuit outputs for each range, processing similar to that achieved with the arrangement of Fig.1 may be achieved. In this manner, the effect similar to that achieved in the arrangement of Fig.1 may be achieved, while the construction is also simplified.

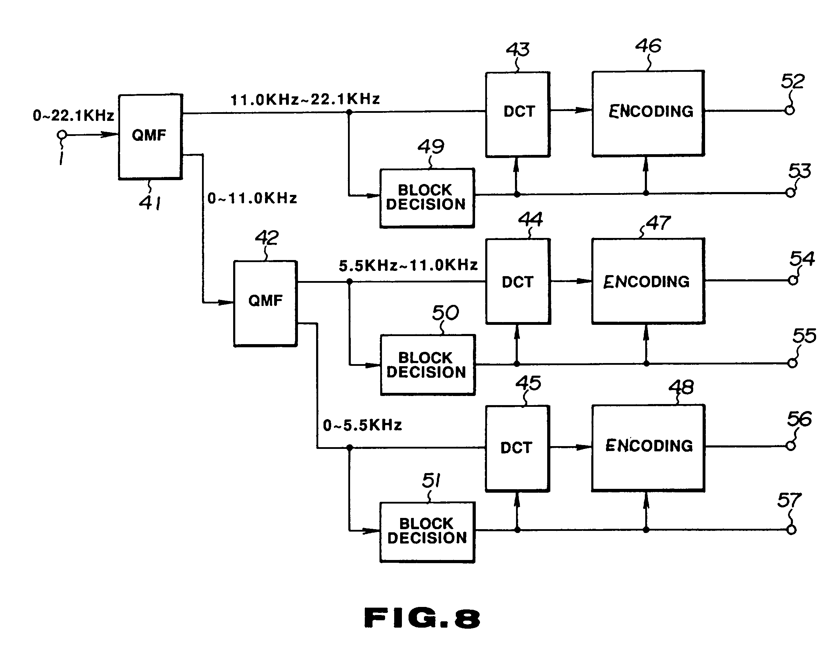

A high efficiency digital data encoding apparatus according to an embodiment of the present invention is shown in Fig.8. The apparatus includes block length decision circuits 49, 50 and 51 for determining block lengths of orthogonal transform for each band, based on characteristics (e.g. transient or stationary) of block data before orthogonal transform of each band (frame-by-frame data for a predetermined time). Orthogonal transform operations are carried out by these circuits 49 to 51 based on the block lengths determined for the respective ranges. Meanwhile, an arrangement for changing the block size is included in the DCT circuits 43 to 45.

Referring to Fig.8, outputs are also transmitted to the block length decision circuits 49 to 51. In these circuits, it is checked if data in the frame 4 of the input audio data are transient signals or stationary signals and, based on the detected results, a block length decision signal is outputted. The block length decision signal renders the DCT processing block length in the DCT circuits 43 to 45 variable.

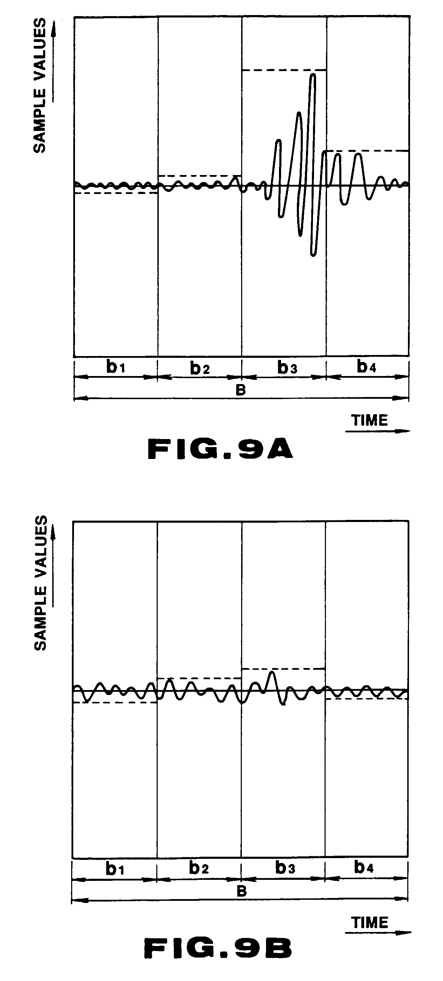

In the block length decision circuits 49 to 51, associated with these bands, the peak level of each sample is found for each of the blocks $b_1$, $b_2$, $b_3$ and $b_4$, obtained by dividing the length of the frame B into four parts, and temporal changes in the sample peak level are found for these blocks $b_1$, $b_2$, $b_3$ and $b_4$. For example, a maximum peak level $Max_{pk}$ and a minimum peak level $Min_{pk}$ are found from the peak levels $PK_1$, $PK_2$, $PK_3$ and $PK_4$ of the blocks $b_1$, $b_2$, $b_3$ and $b_4$, the ratio $Max_{pk}/Min_{pk}$ is compared to a value within a reference range and, if the ratio is larger than the reference value, the signal within the frame B is determined to be transient signal, whereas, if the ratio is less than the reference value, the signal within the frame B is determined to be a stationary signal. If the ratio is within the reference range, the signal is determined to be intermediate between transient signal and stationary signal. Figs.9A and 9B show examples of the transient signal and the stationary signal, respectively.

The circuits 49 to 51 may also be so designed for effecting block length decision based on the signal energies in the blocks $b_1$, $b_2$, $b_3$ and $b_4$. In this case, the energies in the respective blocks are found, the ratio between the maximum and minimum energies is found and the ratio is compared to the reference range of sinal energies by way of effecting the detecting operation as mentioned above.

The above mentioned detecting operation is effected in the block length decision circuits 49 to 51 in which the block lengths conforming to the detected results are determined. The DCT processing in the DCT processing circuits 43 to 45 is carried out according to the block lengths thus determined in the block length decision circuits 49 to 51.

If the signals are found to be stationary signals by the circuits 49 to 51, the block length of each band is set so as to be of the same length, such as the length of the frame B. Thus the block lengths are set to $b_H$, $b_M$ and $b_L$ for the high range of 11.0 to 22.1 kHz, mid range of 5.5 to 11.0 kHz and for the low range of 0 to 5.5 kHz, respectively.

Conversely, if the signal is found to be a transient signal, the block length are so set that the block lengths are shorter for the high and mid ranges and longer for the low range, as shown in Fig.6. That is, for the block length $b_L$ for the low range, corresponding to the frame B, the block lengths for the high and mid ranges are set so as to be one-fourth the block lengths $b_L$. In the example of Fig.6, the high range blocks are of block lengths $b_{H1}$, $b_{H2}$, $b_{H3}$ and $b_{H4}$, whereas the mid range blocks are of block lengths $b_{M1}$, $b_{M2}$, $b_{M3}$ and $b_{M4}$.

If the signal is intermediate between the stationary and transient signals, the block lengths are such that, for the block length $b_L$ for the low range, the block length for the mid range is equal to $B_M$ equal to that for the low range or $b_{M1}$ or $b_{M2}$ equal to one-half that for the low range, while that for the high range is $b_{H1}$, $b_{H2}$, $b_{H3}$ and $b_{H4}$ which are one-half or one-fourth the length for the low range.

Although the low range block length $b_L$ is constant in the embodiments of Figs.3 to 6, such low range block length may also be varied in conformity to signals. The block lengths for the ranges may be subdivided beyond one-half or one-fourth the length of the frame B.

The data within frame B for the respective ranges, composed of plural samples, are DCT processed by the DCT circuits 43 to 45 by block lengths based on the block length decision signals from the circuits 49 to 51. That is, DCT processing for each band is performed with the block lengths conforming to signal characteristics within the frame B.

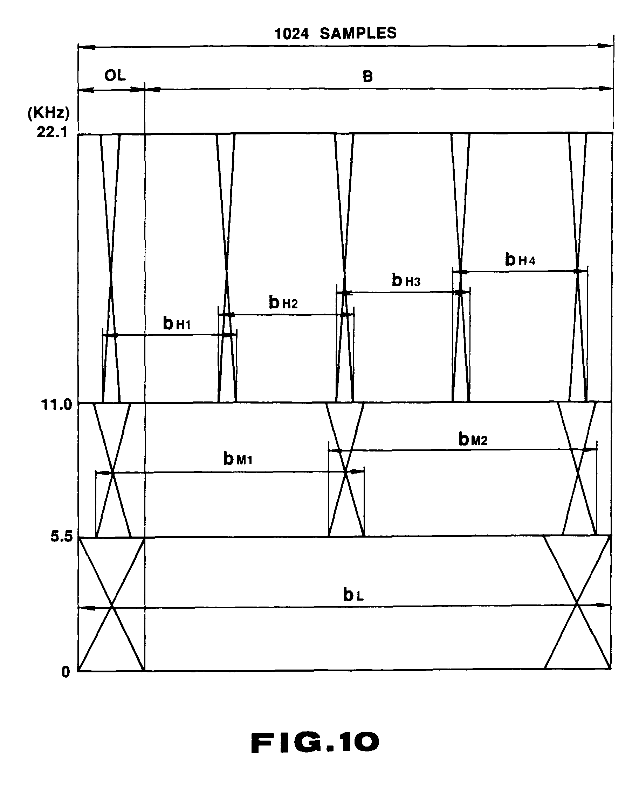

Meanwhile, the frame length in DCT processing by the DCT circuits 43 to 45 is selected to be equal to 1024 samples less an overlap OL, as shown in Fig.10, which shows the case of the signal intermediate the transient and stationary signals in association with Fig.5. The orthogonal transform may also be discrete cosine transform besides DCT.

Outputs from the block length decision circuits 49 to 51 are also transmitted to encoding circuits 46 to 48 adapted for encoding the DCT coefficient data from the DCT circuits 43 to 45.

If data within the frame B is detected as a transient signal and the DCT processing block length is shortened in the DCT circuits 43 to 45, encoding of the DCT coefficient data is effected by adaptive bit allocation within the frame B in the encoding circuits 46 to 48 downstream of the DCT circuits 43 to 45. In the example of Fig.9A, more bits are allocated to the block $b_3$ having the maximum peak level among the blocks $b_1$, $b_2$, $b_3$ and $b_4$, while the numbers of bits are reduced for the remaining blocks $b_1$, $b_2$, and $b_4$. In this manner, more bits may be allocated to the block truly in need of bits, herein the block $b_3$, to follow up with temporal spectral changes. Bit allocation in this case may be effected in taking account of the masking effect.

If data within the frame are detected as stationary signals, and the DCT processing block lengths are selected to be longer in the DCT circuits 43 to 45, encoding in the encoding circuits 46 to 48 is performed with the length of the frame B as a unit length. In the example of Fig.9B, encoding is performed on the frame basis instead of dividing into the four blocks $b_1$, $b_2$, $b_3$ and $b_4$. This dispenses with overlapped encoding of signals with similar spectrum within the frame B.

Besides, in the case of the stationary signals, spectral analyses in the DCT circuits 43 to 45 may be improved in accuracy. Masking calculations, if made, are also improved in accuracy so that the number of bits used for encoding in the encoding circuits 46 to 48 may be reduced.

Outputs from these encoding circuits 46 to 48 are supplied from output terminals 52, 54 and 56. Outputs from the block length decision circuits 49 to 51 are also supplied from output terminals 53, 55 and 57 as subdata. Meanwhile, in the case of the stationary signals, the number of bits for the sub-data may be less than in the case of the transient signals. In the case of the transient signals, the sub-data associated with the four blocks are outputted from these output terminals 53, 55 and 57. In the case of the stationary signals, since the sub-data may be those on the frame B basis, the number of bits for the sub-data may be reduced.

With the above described high efficiency digital data encoding apparatus, since the block lengths for orthogonal transform for the respective ranges are determined by the decision circuits 49 to 51, based on characteristics, such as transient or stationary, of the frame data for the respective ranges prior to orthogonal transform, and the DCT processing for the respective ranges is effected by the DCT circuits 43 to 45 by the block lengths determined from band to band, encoding may be made in conformity to signal characteristics, such as transient or stationary.

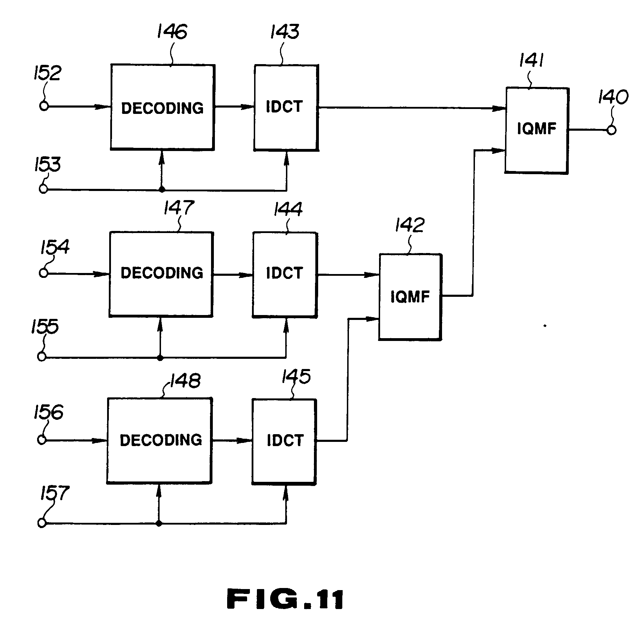

Fig.11 shows, in a schematic block diagram, a decoding apparatus which is a counterpart of the high efficiency encoding apparatus of the present embodiment. Referring to Fig.11, encoded data for output terminals 52, 54 and 56 of the encoding apparatus are supplied to input terminals 152, 155 and 156, while sub-data from output terminals 52, 54 and 56 of the encoding apparatus are supplied to input terminals 153, 155 and 157. The encoded data and the sub-data are supplied to decoding circuits 146, 147 and 148 adapted for decoding the encoded data based on the sub-data. The decoded data are supplied to IDCT circuits 143, 144 and 145 adapted for performing an operation which is the reverse of the processing by the DCT circuits 43 to 45 (inverse discrete cosine transform). The above sub-data are also supplied to the IDCT circuits 143 to 145 so that the processing by the circuits is performed on the basis of these sub-data. An output of the IDCT circuit 143 is supplied to an IQMF circuit 141 adapted for performing a filtering operation which is the reverse of the operation performed by QMF 41. Outputs from IDCT circuits 14 and 15 are supplied to an IQMF circuit 142 adapted for performing a filtering operation which is the reverse of the operation performed by QMF 42. Since an output from the IQMF circuit 142 is supplied to the IQMF circuit 141, a digital audio signal is obtained from IQMF circuit 141 which is a combination of signals divided into the respective bands. This audio signal is outputted at an output terminals 130.

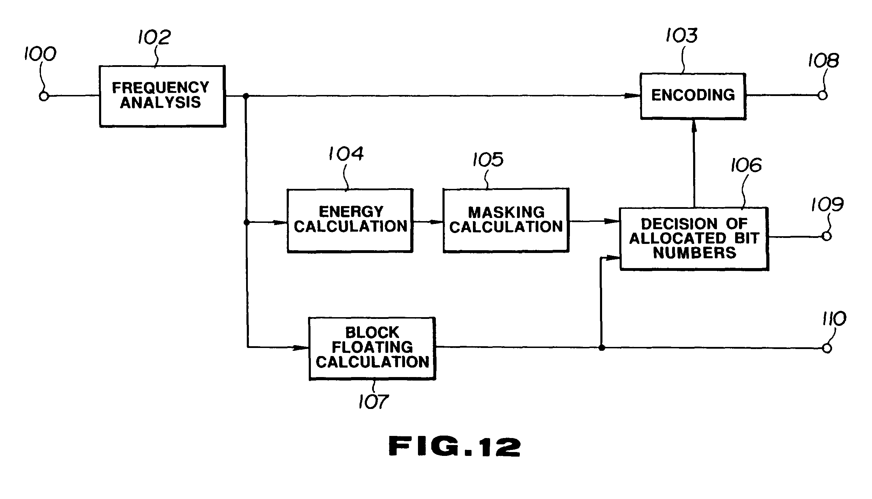

An embodiment of bit allocation is explained with reference to Fig.12.

An apparatus shown in Fig.12 includes a frequency analyzing circuit 102 for frequency analyzing the input digital data, an energy calculating circuit 104 and a masking calculating circuit 105 as noise level setting means for setting the block-by-block tolerable noise level based on the block-by-block energy of output data from the frequency analyzing circuit 102, a block floating calculating circuit 107 for calculating block floating coefficients based on the maximum value data in the plural blocks of output data from the frequency analyzing circuit 102, an encoding circuit 103 for encoding the output of the frequency analyzing circuit 102, and an allocation bit number decision circuit 106 for finding the number of bit allocation at the time of encoding by the encoding circuit 103 based on the output of the noise level setting means and the output of the block floating coefficient calculating circuit 107.

The frequency analyzing circuit 102 may be an independent circuit or may be used simultaneously with the DCT circuits of Fig.2. The encoding circuit 103 is a counterpart of the encoding circuits 46 to 48 of Fig.2.

In the present encoding apparatus, shown in Fig. 12, input digital data, such as audio data, are supplied to an input terminal 100. These input audio data are supplied to the frequency analyzing circuit 102 for analyzing the audio data. In the frequency analyzing circuit 102, frequency analysis of converting the audio digital data of plural samples into spectral data (DCT coefficient data) by orthogonal transform such as DCT.

Output data from the circuit 102 are supplied to the encoding circuit 103 where they are encoded by adaptive bit allocation before being outputted at output terminal 108.

The following arrangement is used for effecting encoding by adaptively allocated number of bits by the encoding circuit 103.

Thus the spectral data from the frequency analyzing circuit 102 are transmitted to the energy calculating circuit 104 as noise level setting means and to the block floating calculating circuit 107.

In the energy calculating circuit 104, blocks each formed of plural spectral data from the analyzing circuit 102 are formed. In the present embodiment, the frequency range is divided into e.g. 25 bands so that the bandwidth become wider towards the higher frequencies according to the critical bands which take certain characteristics of the human auditory sense into account. The energies from one critical band to another, that is the energy sum of the spectral data form one band to another, are found.

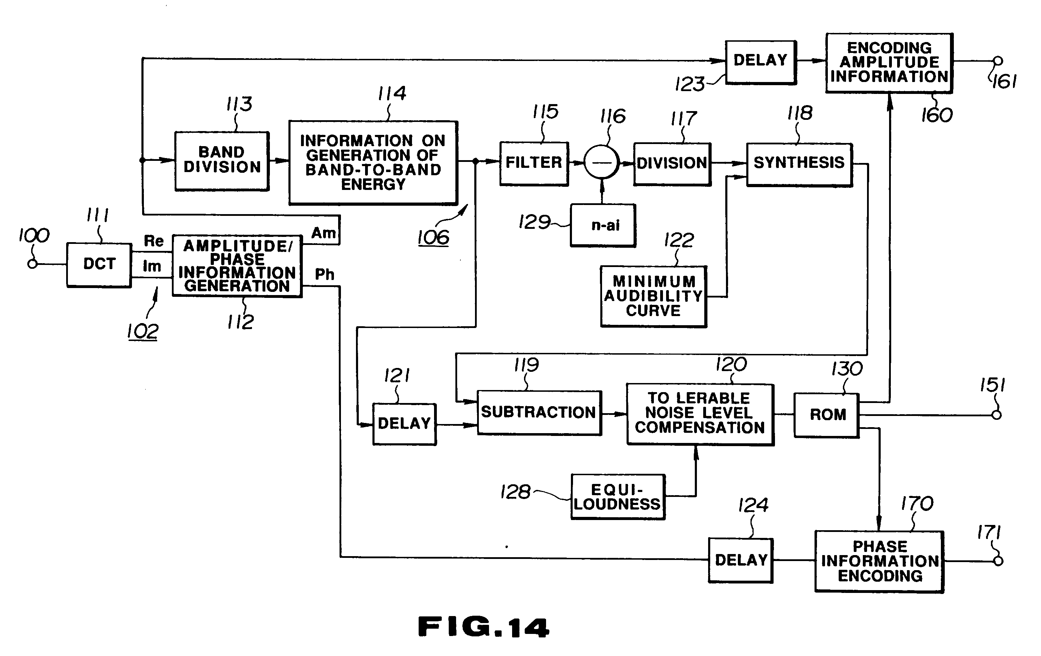

Details of the energy calculating circuit 104 and downstream side circuits will be subsequently explained by referring to Fig.14.

The energy data for the respective bands from the energy calculating circuit 104 are transmitted to a masking calculating circuit 105 which calculates the masking quantity taking account of the masking effect based on the energy data for the respective ranges. Meanwhile, the tolerable noise level taking account of the so-called equi-loudness curve in the human auditory sense characteristics may be found simultaneously with the masking calculations, as shown in Fig.14.

As described above, the information concerning the allowable noise level for the respective bands which has taken account of the so-called masking effect in certain characteristics of the human auditory sense on the basis of the energies for the respective critical bands is transmitted to the allocation bit number decision circuit 106. Outputs from the block floating calculating circuit are also supplied to the allocation bit number decision circuit 106.

In the block floating calculating circuit 107, so-called block floating is carried out for each of blocks each composed of plural spectral data supplied from the frequency analyzing circuit 102. In the block floating operation, a maximum value data is selected from the spectral data in each block and a scale factor or its approximate value corresponding to the maximum value data is obtained as a block scaling factor. The information concerning the block floating coefficient is transmitted to the allocation bit number decision circuit 106. As the approximate value of the block floating coefficient, the maximum value data itself may be transmitted to the allocation bit number decision circuit 106.

The allocation bit number decision circuit 106 decides the number of bit allocation based on the information concerning the tolerable noise level found for each band from the masking calculating circuit 105 and the information of the block floating coefficient.

The allocation bit number decision circuit 106 divides the tolerable noise level for each band from the masking calculating circuit 105 by the number of data in each band, namely the number of the spectral data in the band, to find the tolerable noise level per spectral data in each band. The circuit 106 also finds the information concerning the allocation bit number based on the tolerable noise level per data and the block floating coefficient per block.

Meanwhile, when determining the number of bit allocation, the number of the spectral data at the time of calculating the floating coefficient in the block floating calculating circuit 107 is matched to the number of the spectral data at the time of calculating the tolerable noise level in the energy calculating circuit 104 and in the masking calculating circuit 105 as noise level setting means. In other words, when deciding the number of bit allocation, the number of processing units or blocks in the block floating calculating circuit 107 is matched to a single processing unit or band in the noise level setting means for matching the number of the spectral data, or the number of the processing units or bands for calculating the tolerable noise level is matched to a processing unit or block for calculating the block floating coefficient. The above operation is necessary to perform in view that, since the bandwidths of the critical bands become wider towards the higher frequencies, the number of data differs from range to range so that calculations for finding the number of allocated bits may not be feasible unless the number of data in calculating the block floating coefficient is matched to the number of the range data.

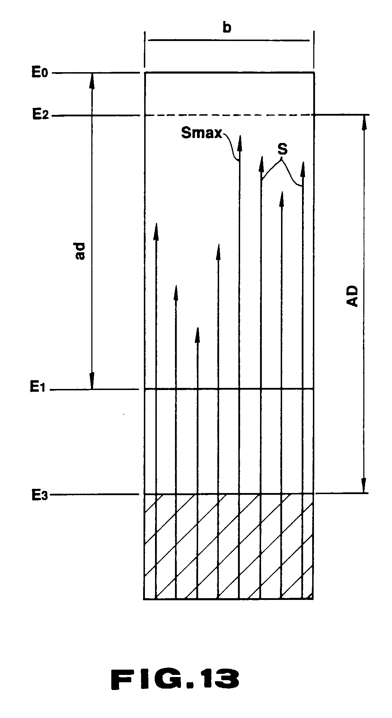

In the present allocation bit number decision circuit 106, a level AD ($E_2 - E_3$) is found, as shown in Fig.13, where $E_3$ is the tolerable noise level per spectral data as found by dividing the total energy level $E_0$ of plural spectral data S in the block $\underline{b}$ (the block in which the number of data has been matched as described above) by the number of the data in the block $\underline{b}$, and $E_2$ is the level of the scale factor or block floating coefficient corresponding to the maximum value data Smax among the spectral data S in the block $\underline{b}$, as shown in Fig.13. The level shown in Fig.13 is denoted by 6 bits and the level in dB as found from ($E_2 - E_3$) is calculated in terms of bits (($E_2 - E_3$)/6.0 bits). The resulting data is used as the information concerning the number of bit allocation for the block $\underline{b}$.

Meanwhile, the conventional practice is to find a level ad ($E_0 - E_1$) where $E_0$ denotes the total energy level in the block $\underline{b}$ and $E_1$ as found on the basis of the total energy level $E_0$ and to calculate the level ad in dB as found from ($E_2 - E_3$)in terms of bits (($E_2 - E_3$)/6.0 bits) to use the resulting data as the information concerning the allocated bit number information for the block $\underline{b}$.

The allocated bit number information as found in the above described manner is supplied to the encoding circuit 103 where encoding is carried out based on the allocated bit number information.

In the above described embodiment, the noise level in each block or band may be suppressed within the tolerable noise level and, even if the signal is of a high tonality, the number of bits may be found so as to be matched to the signal character.

The information concerning the number of bit allocation from the allocation bit number decision circuit 106 is outputted from output terminal 109 so as to be used in a downstream side decoding unit, not shown, for decoding the encoded data. The information of the block floating coefficient from the block floating calculating circuit 107 is outputted from output terminal 110 so as to be used for decoding in the decoding unit.

Referring to Fig.14, the construction for setting the tolerable noise level taking account of the critical bands and the masking effect in the energy calculating circuit 104 and downstream side circuits is explained.

The arrangement shown in Fig.14 is composed of various circuits as noise level setting means for setting the tolerable noise level for each band based on the energies (or peak or mean values) for each of the critical bands.

In Fig.14, digital audio data n the time axis, supplied to input terminal 100, are transmitted to a DCT circuit 111 of a frequency analyzing circuit 102 which is also provided with an amplitude phase information generating circuit 112. In the DCT circuit 111, the audio data on the time axis are converted into data on the frequency axis at an interval of a unit time duration or of a unit block duration to produce DCT coefficient data composed of a real number component Re and an imaginary number component Im. These DCT coefficient data are transmitted to the amplitude phase information generating circuit 112 where an amplitude information Am and a phase information Ph are produced from the components Re and Im and outputted.

Among the amplitude information Am and the phase information Ph, the amplitude information Am is transmitted to the allocation bit number decision circuit 106 and used to find an adaptive bit number allocation information in an amplitude information encoding circuit 160 and a phase information encoding circuit 170. Since in general the human auditory sense is sensitive to the amplitude or power of the frequency range, while being extremely insensitive to phase, only the amplitude information Am is used in the present embodiment to find the allocated bit number information.

The amplitude information Am from the frequency analyzing circuit 102 is transmitted to the amplitude information encoding circuit 160 for encoding, while the phase information Ph is supplied to the phase information encoding circuit 170, similarly for encoding. In the encoding by the encoding circuits 160, 170, the number of bits allocated to the phase information Ph is reduced so as to be smaller than that allocated to the amplitude information Am for encoding, for a predetermined band of the output of the frequency analyzer 102, as will be explained subsequently. The amplitude information is also supplied to the allocation bit number decision circuit 106. The allocation bit number decision circuit 106 decides the allocation bit number information from the block floating coefficient and the tolerable noise level per data, as will be explained subsequently. The allocation bit number decision circuit 106 also decides the allocation bit number information for encoding the amplitude information Am and the allocation bit number information for encoding the phase information Ph, on the basis of the amplitude information Am, as will be explained subsequently, for transmission to the corresponding encoding circuits 160, 170.

It is noted that, in the allocation bit number decision circuit 106, the amplitude information Am may be divided according to the critical bands taking account of the characteristics of the human auditory sense and the masking quantity may be found from the energies of the amplitude information Am for the respective bands so that the number of bit allocation for encoding the amplitude information Am for each band and for encoding the phase information Ph may be determined using the tolerable noise level based on the masking quantity. In determining the number of bit allocation for each band, the number of bit allocation for the phase information Ph is selected to be smaller than that for the amplitude information Am for taking account of characteristics of the human auditory sense. By reducing the number of bits allocated to the phase information Ph in this manner, the number of bits in the encoded data of the phase information outputted from the phase information encoding circuit 170 may be reduced. Even if the number of bits allocated to the phase information Ph is reduced, such reduction is not felt as causing the deterioration in the sound quality to the human ears.

In Fig.14, digital data of the amplitude information from the frequency analyzing circuit 102 are transmitted to a band dividing circuit 113 which divides the digital data into critical bands. With the critical bands, certain characteristics of the human auditory sense or frequency analyzing capability is taken into account. For example, the frequency domain is divided into 25 bands so that the bandwidth will be broader towards the higher frequencies. That is, the human auditory sense has characteristics similar to those of a bandpass filter. The respective bands divided by the respective filters are termed the critical bands.

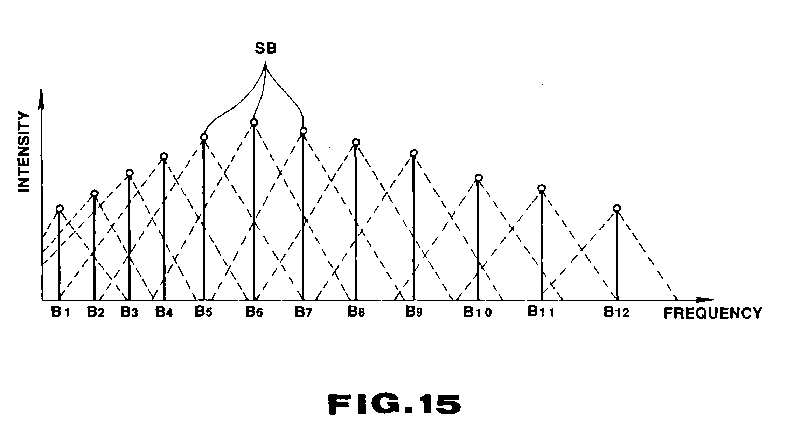

The digital data of the respective bands, divided by the band dividing circuit 113, are transmitted to a total sum detecting circuit 114, in which the energy for each band (spectral intensity at each band) is found by taking the sum total of the intensities of the respective spectral data in each band. An output of the sum total detecting circuit 114, that is the sum spectrum of each band, is termed Burke spectrum. The Burke spectrum SB in each band is as shown for example in Fig.15. In this figure, the number of the critical bands is selected to be equal to 12 ($B_1$ to $B_{12}$).

For taking account of the effect of the Burke spectrum SB on the so-called masking, a predetermined weighting function is convolved on the Burke spectrum. To this end, the output of the sum total detecting circuit 114, that is the values of the Burke spectra SB, are transmitted to a filter circuit 115. The filter circuit 115 is composed of plural delay devices for sequentially delaying input data, plural multipliers for multiplying the outputs of the delay devices by filter coefficients (weighting functions), such as 25 multipliers associated with the bands, and a summing device for summing the outputs of the multiplier outputs. Convolution of the Burke spectra SB is performed in the filter circuit 115 by multiplying filter coefficients 1, 0.15, 0.0019, 0.0000086, 0.4, 0.06 and 0.007 at multipliers M, M-1, M-2, M-3, M+1, M+2 and M+3, respectively, where M is an optional integer. By this convolution, the sum total of the area shown by broken lines in Fig.15 is calculated.

The output of the filter circuit 115 is supplied to a subtractor 116 adapted for finding a level $\alpha$ corresponding to the tolerable noise level in the convolved region. The level $\alpha$ corresponding to the tolerable noise level is such a level which will give a tolerable noise level for each critical band by deconvolution as will be explained subsequently. An admissible function (function representing the masking level) for finding the level $\alpha$ is supplied to the subtractor 116. The level $\alpha$ is controlled by increasing or decreasing the admissible function. The admissible function is supplied from a function generator 129 as later described.

If the number accorded to the critical bands from the low frequency range towards the higher range is $\underline{i}$, the level $\alpha$ corresponding to the tolerable noise level is found from the formula

$$\alpha = S - (n - ai)$$

where n and a are constants, with a>0, and S is an intensity of the convolved Burke spectrum, with (n-ai) in the above formula being the admissible function. In the example of Fig.14, n = 38 and a = 1, in which case optimum encoding may be achieved without deterioration in sound quality.

The level $\alpha$ is found in this manner and the corresponding data are transmitted to a divider 117 adapted for deconvolvng the level $\alpha$ in the convolved region. Thus, by the deconvolution, the masking spectrum may be found from the level $\alpha$. That is, the masking spectrum becomes the tolerable noise level. Although deconvolution is in need of complex processing, it is carried out in the example of Fig.14 by a simplified divider 117.

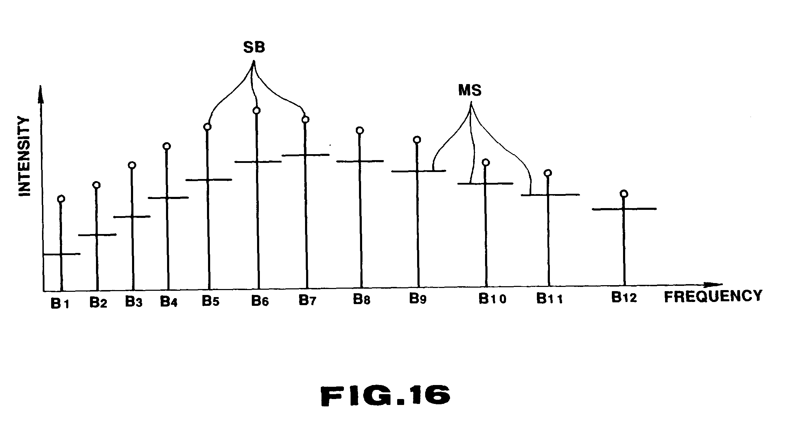

The masking spectrum is transmitted via a synthesis circuit 118 to a subtractor 119 which is supplied via a delay circuit 121 with an output of the sum detection circuit 114, that is the Burke spectrum SB from the above mentioned sum total detecting circuit 114. By the subtraction between the masking spectrum and the Burke spectrum SB by the subtractor 119, the part of the Burke spectrum SB below the level of the masking level MS is masked, as shown in Fig.16.

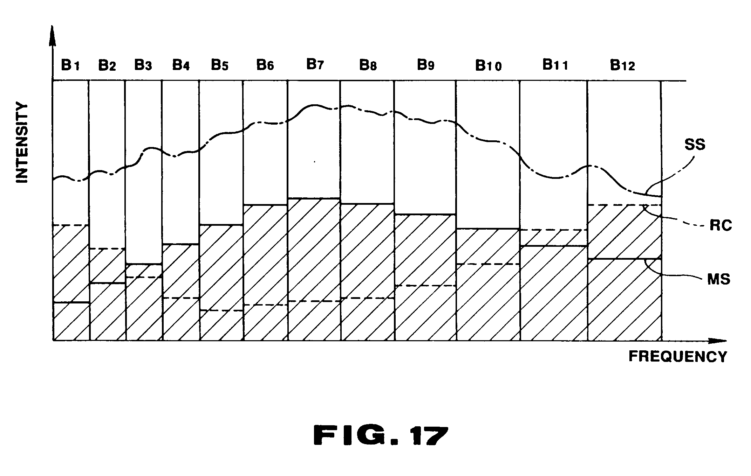

In the synthesis by the synthesis circuit 118, data indicating a so-called minimum audibility curve RC from a minimum audibility curve generator 122 showing characteristics of the human auditory sense as shown in Fig. 17 can be combined with the above mentioned masking spectrum. In the minimum audibility curve, a noise is inaudible if its absolute level is lower than the minimum audibility curve. The minimum audibility curve becomes different with e.g. difference in the playback volume even although the encoding is the same. However, in a practical digital system, since there is no significant difference in the music of the 16 bit dynamic range, if the quantization noise in the frequency range near 4 kHz most audible to the ears is inaudible, the quantization noise lower than the level of the minimum audibility curve is thought to be inaudible in other frequency ranges. Therefore, if it is assumed that the system is used in such a manner that the noise near 4 kHz of the word length of the system is inaudible, and the tolerable noise level is to be obtained by synthesizing the minimum audibility curve RC and the masking spectrum MS, the noise level up to the hatched lines may be taken in this case. Meanwhile, in the example of Fig.14, the level of 4 kHz of the minimum inaudibility curve is matched to the minimum level corresponding to e.g. 20 bits. In Fig. 17, the signal spectrum SS is also shown.

It is noted that, in a tolerable noise level correcting circuit 120, the tolerable noise level from the subtractor 119 is corrected based on the information of the so-called equi-loudness curve. The tolerable noise level correction circuit 120 is supplied with an output from a correction value decision circuit 128.

The correction value decision circuit 128 outputs correcting value data for correcting the tolerable noise level from the subtractor 119 based on the information data of the preset equi-loudness curve. The tolerable noise level from subtractor 119 is corrected by the correcting value which is transmitted to the tolerable noise level correction circuit 120.

Meanwhile, the equi-loudness curve is related to certain characteristics of the human auditory sense, and is found by connecting the pressures of sounds at the respective frequencies which are heard with the same magnitude as the pure sound of 1 kHz. The equi-loudness curve delineates substantially the same curve as that of the minimum audibility curve shown in Fig.17. In the equi-loudness curve, a sound with a sound pressure lower by 8 to 10 dB from 1 kHz in the vicinity of 4 kHz is heard with the same magnitude as 1 kHz sound, whereas, a sound can not be heard in the vicinity of 50 kHz unless the sound pressure is higher by about 15 dB than the sound pressure at 1 kHz. In this consideration, it may be seen that correction of the tolerable noise level taking account of the equi-loudness curve is suited to characteristics of the human auditory sense.

The information concerning the tolerable noise level, determined in this manner, is transmitted to a ROM 130 where plural allocation bit number data used for encoding the amplitude information Am and the phase information Ph are stored. The allocation bit number data conforming to the output of the subtraction circuit 119 (level of the difference between the energy of each band and the output of the noise level setting means) may be outputted from ROM 130. The number of bits allocated to the phase information is less than that allocated to the amplitude information, as described above. The output of ROM 130 is supplied to the amplitude information encoding circuit 160 and the phase information encoding circuit 170. In the circuit 160, the amplitude information Am supplied via delay circuit 123 is encoded with the number of bit allocation from ROM 130, whereas, in the circuit 170, the phase information Ph supplied via delay circuit 124 is encoded. In other words, in these circuits 160, 170, the range components are encoded with the number of bits allocated in accordance with the level of the difference between the energies of the critical bands and the tolerable noise level so that the number of bits allocated to the phase information Ph is less than that allocated to the amplitude information Am. Meanwhile, the delay circuit 121 is provided for delaying the Burke spectrum SB from the sum detection circuit 114 in consideration of the delays caused in the circuits upstream of the synthesis circuit 118 as well as delaying the amplitude information Am or the phase information Ph in consideration of the delays caused in the delay circuits 123, 124 or in the circuits upstream of ROM 130.

Although the allocated bit number information for the phase information Ph and that for the amplitude information Am may be directly supplied from the decision circuit 106 to the decoding circuit, the bit number of the allocation bit number information is compressed in the present embodiment.

That is, in the decision circuit 106, the number of reduced bits of the phase information Ph from the amplitude information Am is determined previously. For example, the number of bit allocation for the phase information Ph and that for amplitude information Am are set in advance such that the number of bit allocation to the phase information Ph for the high range (e,g, 10 kHz or higher) is less by one bit than that for the amplitude information Am. In this manner, only one of the allocation bit information for the phase information or that for the amplitude information may be transmitted along with the encoded data for the phase information Ph and the amplitude information Am.

That is, if the downstream side encoder is apprised of the predetermined conditions of bit reduction, the encoder may find the other allocated bit number information from the remaining bit number information. Thus the latter information need not be transmitted so that the number of bits for the allocated bit number information ma be reduced. Meanwhile if the information transmitted as the allocated bit number information is that for the phase information Ph, the number of transmitted bits may be reduced as compared to the case of transmitting the allocated bit number information for the amplitude information Am.

Data encoded from the amplitude information Am from the amplitude information encoding circuit 160 are outputted via output terminal 161, while data encoded from the phase information Ph are outputted via output terminal 171. The allocated bit number information outputted from the decision circuit 106 is outputted from output terminal 151. The encoded data from amplitude information Am and those from phase information Ph are decoded using the allocated bit number information.

With the above described apparatus, input digital data are converted into amplitude information Am and phase information Ph by frequency analyses, and the number of bits allocated to the phase information Ph is reduced so as to be smaller than that allocated to the amplitude information Am, at the time of encoding the phase information Ph and the amplitude information Am, so that it becomes possible to reduce the encoded data.

Besides, if the number of reduced bits for the phase information Ph as compared to the amplitude information Am is predetermined for each band, only one of the allocated bit number data for the amplitude information Am or for the phase information Ph need be transmitted, so that the number of bits for transmitting the allocated bit information may be further reduced. In addition, since the number of bits allocated to the respective ranges is set using the tolerable noise level based on the masking quantity as found from the energies of the amplitude information for the respective bands, bit compression may be achieved in a manner less subject to degradation as far as the auditory sense is concerned.

Meanwhile, synthesis of the above mentioned minimum audibility curve may be dispensed with, in which case the minimum audibility curve generator 122 and the synthesis circuit 118 may be eliminated and the output from the subtractor 116 is directly transmitted to subtractor 119 after deconvolution by divider 117.

The present invention may be applied not only to the adaptive transform encoding of processing the input digital signals by orthogonal transform, as in the embodiment of Fig.12, but also to an apparatus adapted for performing sub-band coding (SBC), in which case signals are divided into plural bands by bandpass filters etc. for determining the number of bits allocated to each band.

With the present high efficiency digital data encoding apparatus, since the block lengths for orthogonal transform for the respective ranges are determined in the block length decision circuit based on characteristics (transient or stationary etc.) of the block data prior to orthogonal transform of each band, and orthogonal transform for each band is effected with the thus determined block length, encoding may be effected in conformity to signal characteristics, such as transient or stationary, while bit compression may also be made.

With the present high efficiency digital data encoding apparatus, since only one of the outputs from the respective orthogonal transform means is selected, based on the output of the plural orthogonal transform means, optimum encoded output may be obtained in conformity to characteristics of the input digital data and characteristics of human auditory sense by selecting the output of the orthogonal transform means with the least number of allocated bits at the time of encoding, so that optimum sound quality ma be produced by decoding and converting the encoded output into sound.

Besides, with the present high efficiency digital data encoding apparatus, since the number of allocated bits at the time of encoding is determined on the basis of the floating coefficient based on the maximum value data in the block composed of data obtained by frequency analyses of the input digital data and the tolerable noise level based on the block-by-block energy, optimum bit allocation may be achieved even if the signals are high tonality signals.

Moreover, with the present high efficiency digital data encoding apparatus, when the input digital data are converted into the amplitude information and the phase information by frequency analyses and the amplitude information and the phase information are encoded, the number of bits allocated to the phase information for a predetermined range is reduced so as to be smaller than that allocated to the amplitude information, so that the bit compression ratio may be raised and the transmission bit rate may be reduced.

In addition, with the present high efficiency digital data encoding apparatus, since the band in which the allocated bit number information for the phase information Ph is reduced is the high critical band taking account of the characteristics of the human auditory sense, sound quality degradation may be reduced as far as the auditory sense is concerned.

The apparatus of the present invention may be applied effectively to a data encoding apparatus for recording on a package media such as a so-called compact disc.

**Claims**

1.  A high efficiency digital data encoding apparatus in which a input digital data are divided (41,42) into plural bands, blocks each composed of plural samples are formed in each band, and orthogonal transform (43-45) is effected in each block of the band to produce coefficient data, which coefficient data are encoded (46-48), comprising

    a block length decision circuit (49,50,51) for determining the block length for orthogonal transform of each band based on characteristics of block data prior to orthogonal transform of each band,
    and said orthogonal transform of each band is effected with the block length determined by said block length decision circuit (49-51)

2. A high efficiency digital data encoding apparatus according to claim 1 wherein the bandwidth of each band is selected to be wider towards the higher frequencies.

3. A high efficiency digital data encoding apparatus according to claim 2 wherein said block lengths are shorter towards the higher frequencies by subdivision.

4. A high efficiency digital data encoding apparatus according to claim 2 wherein said block lengths are different for the mid and high ranges.

5. A high efficiency digital data encoding apparatus according to claims 1, 2, 3 or 4, characterized in that said orthogonal transform is discrete cosine transform (DCT).

6. A high efficiency digital data encoding apparatus according to claims 1, 2, 3 or 4, characterized in that said orthogonal transform is fast Fourier transform (FFT).

**Patentansprüche**

1. Vorrichtung zur hocheffizienten Kodierung von digitalen Daten, in der digitale Eingangsdaten in mehrere Bänder unterteilt werden (41, 42), in jedem Band Blöcke gebildet werden, die jeweils aus mehreren Abtastproben zusammengesetzt sind, und in jedem Block des Bandes eine orthogonale Transformation durchgeführt wird (43 - 45), um Koeffizientendaten zu erzeugen, die kodiert werden (46 - 48),

mit einer Blocklängen-Entscheidungsschaltung (49, 50, 51) zur Festlegung der Blocklänge für die orthogonale Transformation jedes Bandes auf der Basis von charakteristischen Merkmalen von Blockdaten vor der orthogonalen Transformation jedes Bandes,
und wobei die orthogonale Transformation jedes Bandes mit der von der Blocklängen-Entscheidungsschaltung (49 - 51) festgelegten Blocklänge durchgeführt wird.

2. Vorrichtung zur hocheffizienten Kodierung von digitalen Daten nach Anspruch 1, bei der die Bandbreite der einzelnen Bänder so gewählt ist, daß sie in Richtung höherer Frequenzen größer wird.

3. Vorrichtung zur hocheffizienten Kodierung von digitalen Daten nach Anspruch 2, bei der die Blocklängen in Richtung höherer Frequenzen durch Unterteilung kürzer sind.

4. Vorrichtung zur hocheffizienten Kodierung von digitalen Daten nach Anspruch 2, bei der die Blocklängen für die mittleren und die hohen Bereiche unterschiedlich sind.

5. Vorrichtung zur hocheffizienten Kodierung von digitalen Daten nach Anspruch 1, 2, 3 oder 4, dadurch gekennzeichnet, daß die orthogonale Transformation eine diskrete Cosinus-Transformation (DCT) ist.

6. Vorrichtung zur hocheffizienten Kodierung von digitalen Daten nach Anspruch 1, 2, 3 oder 4, dadurch gekennzeichnet, daß die orthogonale Transformation eine schnelle Fourier-Transformation (FFT) ist.

**Revendications**

1. Un appareil de codage de données numériques à efficacité élevée dans lequel des données numériques d'entrée sont divisées (41, 42) en plusieurs bandes, des blocs, comprenant chacun plusieurs échantillons, sont formés dans chaque bande, et une transformation orthogonale (43-45) est effectuée dans chaque bloc de la bande pour produire des données de coefficients, ces données de coefficient étant codées (46-48), comprenant

un circuit de décision de longueur de bloc (49, 50, 51) pour déterminer la longueur de bloc pour la transformation orthogonale de chaque bande, sur la base de caractéristiques des données de bloc avant la transformation orthogonale de chaque bande,
et la transformation orthogonale de chaque bande est effectuée avec la longueur de bloc qui est déterminée par le circuit de décision de longueur de bloc (49-51).

2. Un appareil de codage de données numériques à efficacité élevée selon la revendication 1, dans lequel la largeur de bande de chaque bande est sélectionnée de façon à être plus large vers les fréquences supérieures.

3. Un appareil de codage de données numériques à efficacité élevée selon la revendication 2, dans lequel les longueurs de bloc sont plus courtes vers les fréquences supérieures, par subdivision.

4. Un appareil de codage de données numériques à efficacité élevée selon la revendication 2, dans lequel les longueurs de bloc sont différentes pour les gammes médiane et haute.

5. Un appareil de codage de données numériques à efficacité élevée selon les revendications 1, 2, 3 ou 4, caractérisé en ce que la transformation orthogonale est une transformation en cosinus discrète (ou DCT).

6. Un appareil de codage de données numériques à efficacité élevée selon les revendications 1, 2, 3 ou 4, caractérisé en ce que la transformation orthogonale est une transformation de Fourier rapide (ou FFT).

**FIG.1**

**FIG.2**

EP 0 537 361 B1

FIG. 3

FIG. 4

FIG.5

FIG.6

**FIG. 7**

**FIG.8**

EP 0 537 361 B1

EP 0 537 361 B1

FIG.9A

FIG.9B

22

**FIG.10**

**FIG.11**

EP 0 537 361 B1

**FIG.12**

**FIG.13**

**FIG.14**

EP 0 537 361 B1

**FIG.15**

FIG.16

FIG. 17